# EUROPEAN PATENT APPLICATION

(11) **EP 2 112 083 A1**
(43) Date of publication of application: **28.10.2009**
(21) Application number: 08425292.3
(22) Date of filing: 24.04.2008
(51) Int. Cl.: B65D 21/02, B65D 25/10, B65D 81/34

(54) **Stackable container**

(71) Applicant: Gio' Style Lifestyle S.p.A., 24059 Urgnano (BG) (IT)
(72) Inventor: Alito, Giuseppe, 20133 Milano (MI) (IT)
(74) Representative: Trupiano, Federica

(57) **Abstract**

The present invention relates to a stackable container for foods comprising at least a base body (2) and a lid (3), said base body (2) being provided with a shaped upper rim (S) and with a lower portion (A) produced in elastically flexible material.

## Description

The present invention relates to a stackable container for preserving and/or cooking food products, in particular to cook or heat foods in the microwave oven and or to preserve them in the refrigerator or freezer. This container is provided with a sealing system for improved hermetic closure during preservation and with an aeration system for regulation of the humidity or of the internal overpressure during cooking in the microwave oven.

There are known on the market different containers for foods **characterized in that** they can be stacked.

Prior art containers are generally made of thermoplastic material and produced using a single material.

Some containers for foods are stacked simply by inserting the base of a first container into the open upper part of a second container. In this case the containers are not hermetic as there are no sealing elements. An example of this type of container is described in the Japanese patent JP9285378.

JP9285378 describes a stackable container for foods that can be kept in the refrigerator or freezer and, when needed, used to heat food in the microwave oven. Fig. 3, as published in JP9285378 which reproduces the container as described in the patent, shows a plurality of containers stacked vertically to form a single unit. The individual container is provided at the base with a rim which can be inserted in the upper part of another container to allow stacking. When several containers are stacked, the uppermost one is closed with a lid provided with a groove suitable to receive the upper rims of said container. The same lid can be utilized on any one of the other containers, if they are used individually.

The individual containers can be kept in the freezer or refrigerator and placed in the microwave oven to heat the food before serving it.

The individual container can be made of ceramic material, such as glass, earthenware and porcelain, while the lid can be made of plastic or glass.

Other containers for foods are stacked by inserting the base of a first container into a corresponding housing produced in the lid of a second container. The containers are hermetic, but in order to be stacked on top of one another they must be provided with lids or closing elements with specific housings that close the open upper part of each container to be stacked. An example of this type of container is described in the United States patent US2008/0000795.

The United States patent US2008/0000795 describes a set of stackable containers of different sizes. Figure 4, as published in US2008/0000795, shows a three-dimensional view of a set of containers. Each container comprises a base, equipped with a support and open at the top, and a removable lid to close the open part of said base. Each lid presents a recess suitable to house the base of a second container to allow stacking. Said containers are designed so that those of smaller dimension can be stacked on top of those of larger dimension, but not vice versa.

Yet other containers can be stacked simply by inserting the base of a first container into the open upper part of a second container, after closing said open part by means of an internal sealing element, on which the base of the first container is to rest. An example of this type of container is described in the French patent FR2840886.

FR2840886 describes an hermetic container of stackable type. The rim of the container presents an inward facing stepped rim forming a housing for a closing element or lid provided with a seal. The seal is inside an L-shaped profile located under the closing element so as to be in contact with the vertical internal walls of the container. Figure 3, which reproduces the container as described in FR2840886, shows the cross section of two containers during stacking. The individual container is provided with a stepped rim suitable to receive a closing element or lid comprising in the lower part thereof an L-shaped profile in which a seal is housed. Said seal comes into contact with the vertical internal part of the container, thus ensuring hermetic closure thereof.

The containers illustrated in the aforesaid patents can be divided into two types:
- Stackable containers without hermetic closure;
- Stackable containers with hermetic closure, in which stacking and hermetic closure are entrusted to an element separated from the base body.

Finally, these types of container are generally produced in a single material, tending to be rigid, which does not ensure correct seal.

Therefore, prior art containers present various disadvantages. Firstly, they require an additional element, i.e. a closing element, separated from the base body, to allow simultaneous stacking and hermetic closure.

Moreover, containers according to prior art are not stable when stacked as the base of the first container is either simply inserted into the open part of the second container or is interlocked in a housing of the closing element or lid, but only occupies a small portion of the total surface with consequent instability.

The object of the present invention is to provide a stackable container capable of ensuring a high level of seal for better preservation and/or cooking of foods.

Another object of the present invention is to provide a stackable container designed so as to allow stacking without the use of any closing element between one container and the other and simultaneously ensuring excellent seal.

Yet another object of the present invention is to provide a stackable container that can satisfy the need to regulate any internal overpressures in the case of cooking or heating foods contained therein, for example in the microwave oven, and simultaneously allow air exchange in the case of simple preservation of these foods in a controlled environment (for example in the refrigerator). The container according to the present invention is therefore produced to include in the two possible uses thereof, in the refrigerator/freezer and in the microwave oven.

A further object of the present invention is to provide a container that can be used stacked in the microwave oven to heat and/or cook different foods simultaneously.

Yet a further object of the present invention is to provide a container that does not slip when placed on smooth surfaces.

These and other objects and relative advantages which will be more apparent from the description below are achieved by a stackable container as claimed in claim 1.

The container of the present invention solves the problem of ensuring excellent seal of the containers and simultaneous stacking thereof, through the use of a stackable container, equipped with lid, provided in the lower part thereof with a portion produced in a different material to that of the base body and integrated therewith.

The lid is also provided with a central part produced in a different material to that of the rim.

In particular, the base body of the container and the central part of the lid according to the present invention, are advantageously produced in a rigid plastic material such as polypropylene currently certified for food contact.

The lower portion of the base body and the rim of the lid are instead advantageously made of an elastically flexible material, such as a thermoplastic elastomer (TPE), for example of the type currently marketed with the name DRYFLEX E FG1 85 Naturale, which ensures good adhesion to the surface and also good deformability of the piece.

The container according to the present finding is produced according to the conventional method of co-moulding plastic materials, with the advantage that the two parts of different materials, which are connected to form both the base body and the lid, are produced in one piece in a single mould, with consequent advantage also in terms of costs.

According to an advantageous aspect, the container according to the invention can be utilized to cook/heat food in the microwave oven, due to the presence of vent holes. In fact, each container presents at least one vent hole in proximity of the upper rim of the base body to allow venting of any gases that can form in the container during cooking or heating.

According to another advantageous aspect, the containers can be used stacked in the microwave oven to allow simultaneous cooking/heating of several foods.

According to a further advantageous aspect of the invention, the container, placed on a smooth surface, is held in position due to the lower portion of the base body made of elastically flexible material. In fact, besides ensuring hermetic closure of the container, said elastically flexible portion, located in the lower part of the base body, also has non-slip properties.

A non-limiting illustrative example of a stackable container for foods equipped with a system to ensure increased seal and simultaneously allow stacking of several containers is described below with reference to the accompanying figures, in which:
- Figure 1 shows a perspective view of a stackable container for foods according to the invention;
- Figure 2 shows a cross sectional view of a stackable container for foods according to the invention;
- Figure 3 shows a cross sectional view of a detail of the lid-base body system when the lid closes the base body;
- Figure 4 shows a cross sectional view of a detail of the connection of the base body to the portion made of elastically flexible material.
- Figure 5 shows a perspective view of a set of containers stacked according to the invention;
- Figure 6 shows a cross sectional view of a set of containers stacked according to the invention; and
- Figure 7 shows a cross sectional view of a detail of the method of connecting the lower part of a first base body to the shaped upper rim of a second base body during stacking.

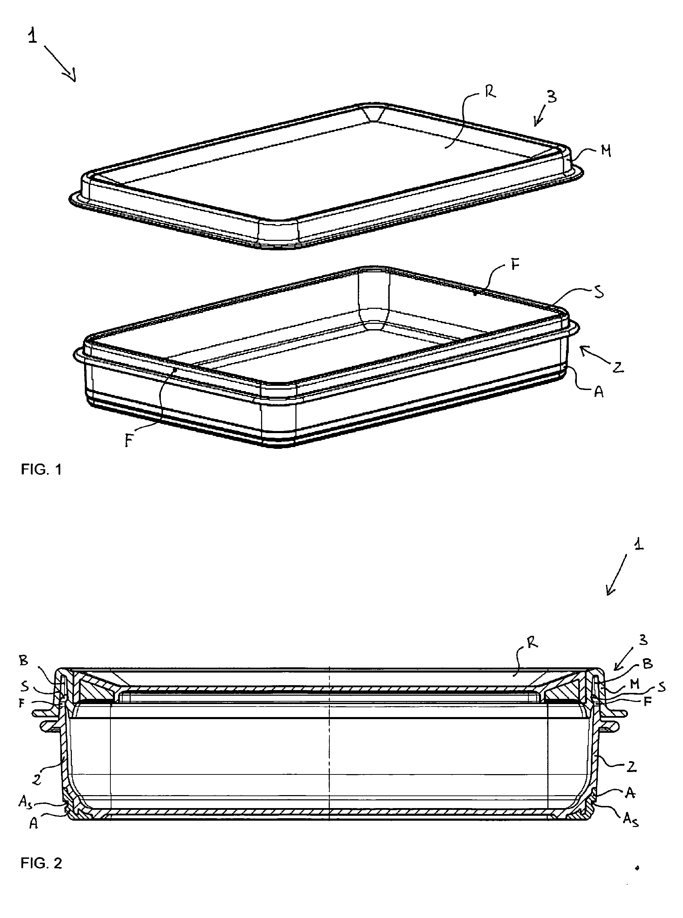

A preferred embodiment of the container 1, forming the object of the present invention, is shown in Figure 1 and comprises a base body 2 and a closing device or lid 3.

The base body 2 and the corresponding lid 3 are preferably rectangular, but the shapes and dimensions in which they are produced can be any.

The base body 2, produced in a rigid plastic material, is provided with a shaped upper rim S, with a lower portion A, integral with the base body 2 and produced in an elastically flexible material, and with at least one vent hole F in proximity of said shaped rim S.

The lid 3 is instead provided with a central part R produced in rigid plastic material and with a rim M produced in elastically flexible material.

When the lid 3 closes the base body 2, the rim M of the lid 3 receives the shaped rim S thus ensuring optimal seal. The fact that the rim M is produced in elastically flexible material on the one hand ensures a high level of hermetic closure of the container and on the other allows venting of any gases produced during cooking or heating the foods, for example in the microwave oven, through the vent holes F as the rim M is able to deform elastically.

Simultaneously, the lower portion A of the base body 2 has non-slip properties when the container is placed on any smooth surface. This characteristic is very advantageous as it prevents the container, through accidental movement, from sliding along the surface or table on which it is placed, and spillage of the contents, above all in the case in which hot foods are contained therein.

Figure 2 shows a cross sectional view of a container according to the invention when the lid 3 closes the base body.

According to the preferred embodiment the lid 3 has a central part R, flared, but which can also be flat, and a rim M integral with said central part R which has an upside down "U" shape so as to form therein a housing B into which the shaped upper rim S of the base body 2 is inserted.

Therefore, in this closing configuration the rim M of the lid 3 does not only receive the shaped rim S, but also another portion of the upper part of the base body 2 and in particular the part in which the vent holes F are present.

The lower part of the base body 2 is instead provided with a portion A made of elastically flexible material equipped with a groove As. Said lower portion A, which is integral with the base body 2, runs along the perimeter of the lower part of said base body 2.

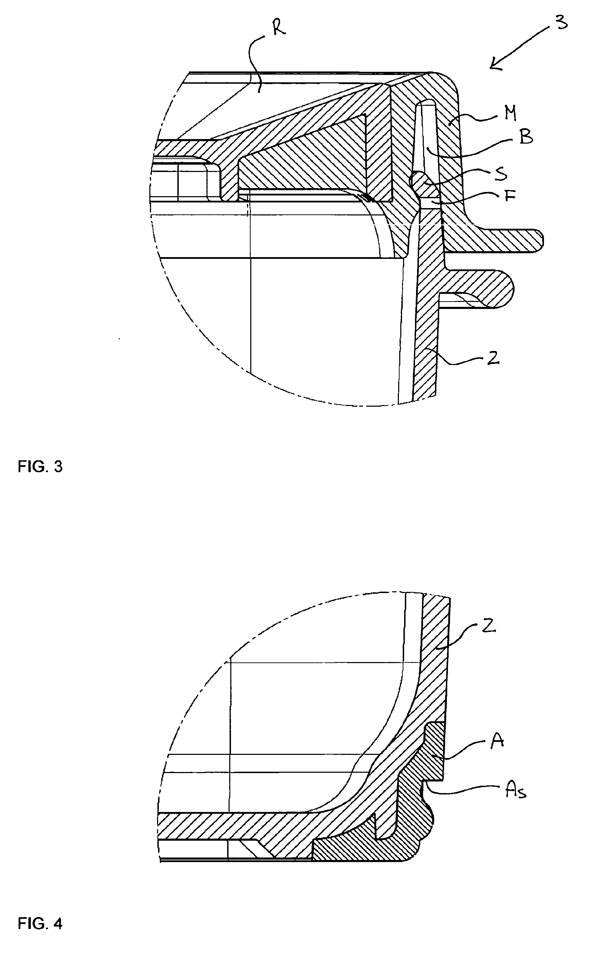

Figure 3 shows the cross section of a detail of the lid-base body system when the lid closes the base body. As already stated above, the shaped rim S is inserted with extreme ease inside the housing B due to the elastic properties of the rim M, which are also very useful in the case of cooking or heating food as, by allowing deformation of said rim, any gases that may form inside the container are able to escape through the vent holes F.

In fact, any gases (such as steam) that form during cooking or heating of foods can escape through the vent holes F, produced in proximity of the upper rim S and in particular immediately below said rim S, as the rim M of the lid 3 is elastically deformable.

Figure 4 is a cross sectional view of a detail of the connection of the base body to the portion A made of elastically flexible material. Said portion A, integral with the base body 2 as both are produced simultaneously in a single mould, has a double function: to prevent slipping and to seal.

When the container is placed on a smooth surface the portion A prevents slipping, as the material with which it is produced increases friction between container and surface limiting or entirely preventing movements.

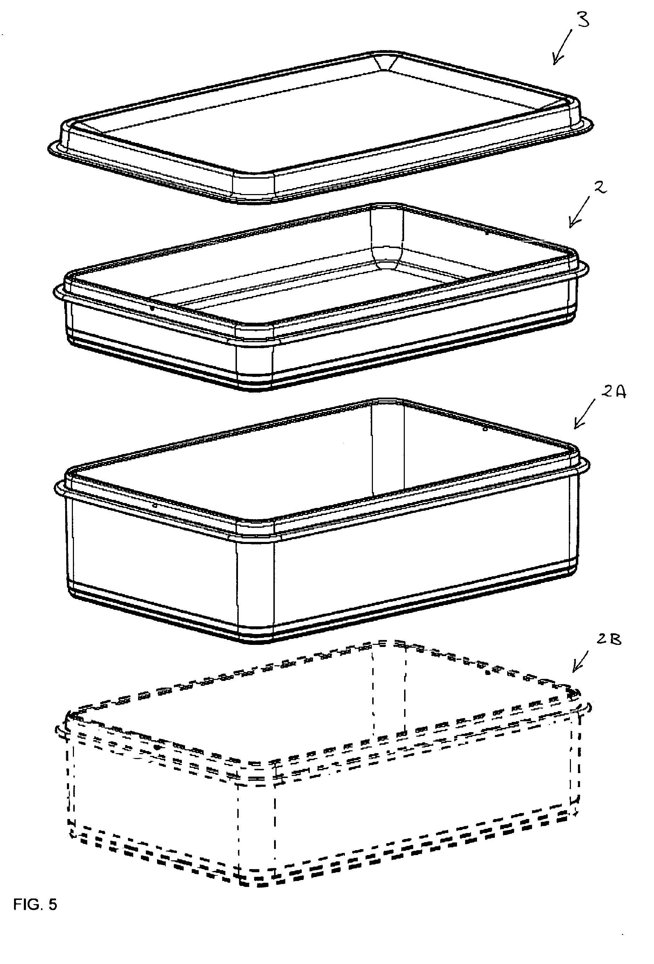

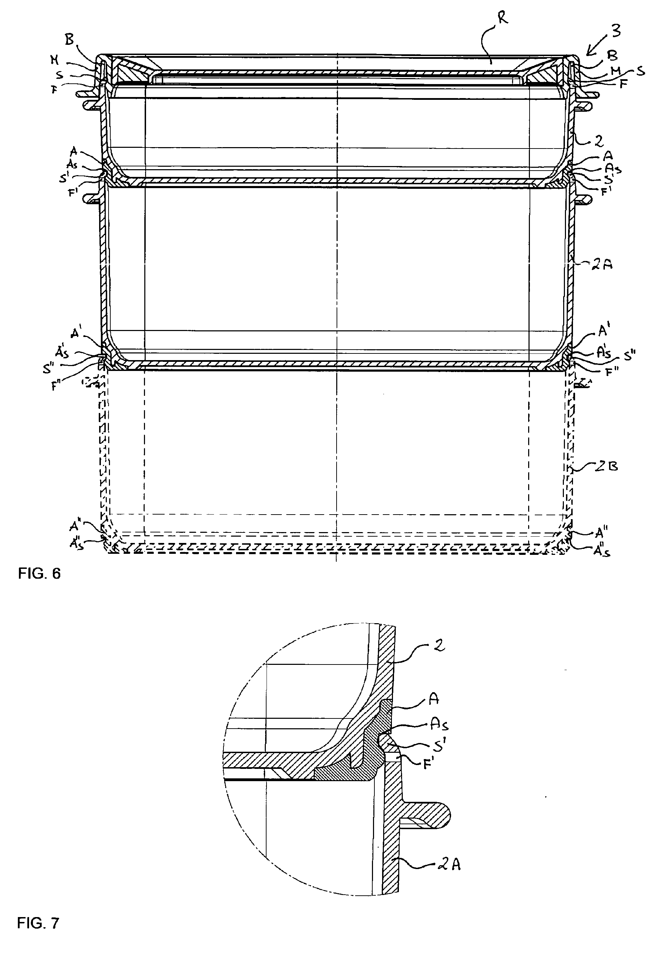

The same portion A acts as a seal in the case in which several containers are stacked as shown in Figures 5 and 6, which respectively represent a set of stacked containers in a perspective and in a cross sectional view.

The containers according to the invention can be stacked with various configurations, superposing several base bodies 2,2A,2B...of any height according to need and closing the first base body 2 positioned uppermost with the lid 3.

Each base body 2,2A,2B.... is provided with a shaped upper rim S,S',S", ... and with a lower portion A,A',A", ..., provided with a groove As,A's,A"s, ..., produced in elastically flexible material. Immediately below said shaped rim S,S',S", ... there is at least one vent hole F,F',F", ... used to vent any gases that may form during the cooking or heating of foods.

Figures 5 and 6 show the minimum stacking configuration obtained by superposing a first base body 2 on a second base body 2A; a third base body 2B, exemplifying any other base bodies which can be stacked, is represented with dashed tines.

When several base bodies 2, 2A, 2B, ... are stacked, the first base body 2 acts as closing element of the second base body 2A and the relative portion A instead acts as seal. Said portion A is in fact equipped with a groove As that houses the shaped rim S' of the base body 2A, thereby ensuring a high level of seal.

Likewise, the second base body 2A acts as closing element of the third base body 2B, if provided, and the relative lower portion A' acts as a seal. In this case said portion A' is equipped with a groove A's that allows the shaped rim S" of the third base body 2B, if provided, to be housed.

The base body located uppermost in the stack, i.e. the base body 2, is closed hermetically with the lid 3.

Figure 7 shows a cross sectional view of a detail of the method of connecting the two containers during stacking, in particular connection of the lower part of the first base body 2 to the shaped upper rim S' of the second base body 2A. As previously described, the base body 2 presents a lower portion A equipped with a groove As. Said groove is suitable to house the shaped upper rim S' of the second base body 2A during stacking. In this configuration the portion A of the first base body 2 acts as a seal for the second base body 2A due to the elastic properties of the material with which it is produced, i.e. a thermoplastic elastomer (TPE), for example of the type currently marketed with the name DRYFLEX E FG1 85 Naturale, as it forms a high level of seal, adapting perfectly to the receiving housing.

Said portion A, being positioned to correspond with the vent hole F' present in the upper part of the base body 2A, ensures hermetic closure of the container, in the case in which this is placed, for example, in the refrigerator or freezer, as it closes said vent hole F' perfectly.

In the same manner, in the case in which the container is placed in the microwave oven to cook or heat food, said portion A deforms to allow any gases, such as steam, which form inside, to escape through the vent hole F'.

Therefore, the container according to the invention can be used individually or stacked both for preservation in a controlled environment, such as a refrigerator or freezer, and in the microwave oven.

The base body and the central part of the lid of the container are produced in plastic material currently certified for food contact, preferably polypropylene, and in any case produced in material suitable for use both in the microwave oven and in the refrigerator/freezer. The rim M of the lid and the lower portion A of the base body are produced in an elastically flexible plastic material, such as a thermoplastic elastomer (TPE), for example of the type currently marketed with the name DRYFLEX E FG1 85 Naturale, so as to ensure deformability and adhesion to the surface.

In another embodiment, the container according to the invention can be used as container for pet foods. In fact, besides preserving the food in the refrigerator and heating it in the microwave, this container can be used as a bowl. As the rubber portion located in the lower part of the base of the container is non-slip, it prevents the animal from moving the container/bowl while eating the food.

## Claims

1. Stackable container for foods comprising at least a base body (2) and a lid (3) **characterized in that** said base body (2) is provided with a shaped upper rim (S) and a lower portion (A) produced in an elastically flexible material.

2. Container as claimed in claim 1, **characterized in that** said lower portion (A) of said base body (2) is equipped with a groove (As).

3. Container as claimed in the preceding claims, **characterized in that** said lower portion (A) of said base body (2) is non-slip.

4. Container as claimed in the preceding claims, **characterized in that** said base body (2) and said lower portion (A) are produced simultaneously in a single mould.

5. Container as claimed in claim 1, **characterized in that** said lid (3) is provided with a central part (R) and with a rim (M) produced in elastically flexible material.

6. Container as claimed in claim 5, **characterized in that** said central part (R) and said rim (M) are produced simultaneously in a single mould.

7. Container as claimed in the preceding claims, **characterized in that** said base body (2) and said central part (R) are made of rigid plastic material.

8. Container as claimed in claim 7, **characterized in that** said rigid plastic material is polypropylene.

9. Container as claimed in the preceding claims, **characterized in that** said lower portion (A) and said rim (M) are produced of elastically flexible material.

10. Container as claimed in claim 9, **characterized in that** said elastically flexible material is a thermoplastic elastomer.

11. Container as claimed in claim 1, **characterized in that** said base body (2) is equipped with at least one vent hole (F) located in proximity of the upper rim (S).

12. Container as claimed in one of the preceding claims, **characterized in that** said vent hole (F) is located to correspond with said rim (M) when said lid (3) closes said base body (2).

13. Stackable container for foods as claimed in claim 1, **characterized in that** it comprises a first base body (2), a second base body (2A) provided with a shaped upper rim (S'), a lid (3), said shaped upper rim (S') of said second base body (2A), being housed in a groove (As) provided on said lower portion (A) of said first base body (2).

14. Stackable container for foods as claimed in claim 1, **characterized in that** it comprises a plurality of base bodies (2, 2A, 2B,...), each provided with a shaped upper rim (S, S', S",...), a lid (3), said shaped upper rims (S, S', S",...) of said plurality of base bodies (2, 2A, 2B,...), being housed in a plurality of grooves (As,A's,A"s) each provided on the corresponding lower portion (A,A',A",...) of said base bodies.

15. Container as claimed in the preceding claims, **characterized in that** said vent hole (F) is located in said lower portion (A) when at least two containers are stacked.
